# EUROPÄISCHE PATENTSCHRIFT

(11) **EP 3 174 729 B1**
(45) Veröffentlichungstag und Bekanntmachung des Hinweises auf die Patenterteilung: **30.10.2019**
(21) Anmeldenummer: 15747120.2
(22) Anmeldetag: 24.07.2015
(51) Int. Cl.: B42D 25/36, B42D 25/351, B42D 25/47, B42D 13/00

(54) **DATENBLATT UND VERFAHREN ZU DESSEN HERSTELLUNG SOWIE EIN WERT- UND/ODER SICHERHEITSDOKUMENT**
DATA SHEET, METHOD FOR THE PRODUCTION THEREOF, AND DOCUMENT OF VALUE AND/OR SECURITY DOCUMENT
FEUILLE DE DONNÉES ET SON PROCÉDÉ DE FABRICATION ET DOCUMENT DE VALEUR ET/OU DE SÉCURITÉ

(30) Priorität: 28.07.2014 DE 102014110585
(43) Veröffentlichungstag der Anmeldung: 07.06.2017
(73) Patentinhaber: Bundesdruckerei GmbH, 10969 Berlin (DE)
(72) Erfinder: SEIJO BOLLIN, Hans-Peter, 10245 Berlin (DE); SIEBERT, Martin, 10965 Berlin (DE); LESCHE, Ulrike, 13156 Berlin (DE); HENNIG, Marlen, 10367 Berlin (DE); MATHEA, Arthur, 14199 Berlin (DE); SPRINGMANN, Edward, 10249 Berlin (DE)
(74) Vertreter: Mammel und Maser
(86) Internationale Anmeldenummer: PCT/EP2015/067013
(87) Internationale Veröffentlichungsnummer: WO 2016/016130

(56) Entgegenhaltungen:
- EP-A1- 2 487 029
- EP-B1- 2 429 825
- WO-A1-2010/146065
- WO-A1-2013/182692
- US-A1- 2003 082 348
- US-A1- 2012 104 102

## Beschreibung

Die Erfindung betrifft ein Datenblatt für ein Wert- und/oder Sicherheitsdokument und ein Verfahren zu dessen Herstellung sowie ein Wert- und/oder Sicherheitsdokument.

Aus der US 2003/0082348 A1 ist ein Sicherheitsdokument bekannt, welches ein Zellulosesubstrat umfasst, in dem ein transparenter Abschnitt eingebracht ist. Dieses Zellulosesubstrat weist auf zumindest einer Seite einen Druck auf. Die Faserverbundschicht ist mit einer Vergussmasse zur Bildung des transparenten Abschnitts vollständig getränkt.

Aus der EP 2 429 825 B1 ist ein Herstellungsverfahren eines Sicherheitselementes für ein Sicherheitsdokument bekannt. Dieses Sicherheitsdokument umfasst ein Substrat, welches im Wesentlichen aus Papier auf Basis von natürlichen und/oder synthetischen Fasern, poröses Papier und/oder Kartonpapier besteht. In einem ersten Schritt wird ein Teilbereich imprägniert und in einem zweiten Schritt wird zur Durchsichtigmachung ein Produkt in einem zweiten, nicht imprägnierten Bereich aufgetragen.

Aus der WO 2010/146065 A1 ist eine Folienverbundbanknote mit einem mindestens einlagigen Basispapier und zwei Kunststofffolien, die dieselben Flächenabmessungen wie das Basispapier besitzt, bekannt, wobei die Kunststofffolien das Basispapier an beiden Hauptflächen jeweils vollflächig bedecken.

Aus der WO 2013/182692 A1 ist des Weiteren ein Sicherheitsdokument bekannt, welches ein Papiersubstrat umfasst, das auf einer ersten und einer gegenüberliegenden Seite eine erste und zweite Folie aus Polymermaterial aufnimmt, die sich über die erste und zweite Seite des Papiersubstrats erstrecken.

Aus der DE 10 2006 037 383 A1 ist ein Verfahren zur Herstellung eines Mehrschichtaufbaus sowie ein Mehrschichtaufbau für ein Identifikationsdokument bekannt. Dieser Mehrschichtaufbau umfasst eine Substratschicht mit einem darin eingebrachten Transpondermodul. Des Weiteren weist die Substratschicht im Randbereich auf einer Ober- und Unterseite eine Anhäufung von einzelnen Fasern auf, welche in eine Klebemittelschicht eingebunden werden, um eine Deckschicht in der Substratschicht zu fixieren. Ein solcher Mehrschichtaufbau kann als Visasticker dienen. Ebenso kann dieser Mehrschichtaufbau auf eine Personalisierdatenseite aufgeklebt oder mit dieser verbunden werden, wobei dieser Verbund zusätzlich noch mit einer Deckschicht versehen wird.

Aus der WO 2006/079224 A1 ist ein Einlageblatt bekannt, welches eine Kernschicht aus einem textilen Gewebe aufweist, das auf jeweils einer Außenseite einen Datenträger zur Bildung einer Datenseite umfasst. Die textile Schicht ragt über die Datenträger zur Bildung einer Lasche hinaus. In der textilen Schicht sind Durchbrüche vorhanden, so dass die einander gegenüber liegenden Datenträger durch Lamination sich durch die Durchbrüche erstrecken und unmittelbar miteinander verbunden sind.

Der Erfindung liegt die Aufgabe zugrunde, ein Datenblatt für ein Wert- und/oder Sicherheitsdokument vorzuschlagen sowie ein Verfahren zu dessen Herstellung, welche eine erhöhte Spaltfestigkeit aufweist bzw. zu einer erhöhten Spaltfestigkeit führt und das Datenblatt sich insbesondere bei Manipulationen selbst zerstört. Des Weiteren liegt der Erfindung die Aufgabe zugrunde, ein Wert- und/oder Sicherheitsdokument vorzuschlagen, um Fälschungen oder Verfälschungen zu verhindern.

Die Aufgabe der Erfindung wird durch ein in Anspruch 1 definiertes Datenblatt gelöst. Durch ein solches Datenblatt wird ermöglicht, dass der auf einer oder auf beiden Seiten der Substratlage aufgebrachte Druck, insbesondere Sicherheitsdruck, durch die Vergussmasse zur Faserverbundschicht eingeschlossen wird. Darüber hinaus folgt durch die Tränkung der Faserverbundschicht mit der Vergussmasse ein Schließen der Poren der Faserverbundschicht. Diese offenen Poren der Faserverbundschicht werden durch die Vergussmasse ausgefüllt. Dadurch wird ein Aufspalten der Faserverbundschicht oder ein Abschälen einer Schichtdicke oder eines Randbereichs von der Substratschicht verhindert bzw. führt zu einer sichtbaren Zerstörung der Substratschicht. Bei einem solchen Manipulationsversuch erfolgt eine unkontrollierte Zerstörung des formschlüssigen Verbundes, da die unregelmäßige Mikrostruktur der fest in eine Matrix eingebundenen Wirrfasern der Faserverbundschicht die bei einem Manipulationsversuch eingebrachten Kräfte derart unvorhersehbar umlenkt, dass die vom Fälscher gewünschte präzise Trennung in definierte Bestandteile verhindert wird. Dadurch wird auch die Delaminierresistenz erhöht.

Bei dem Datenblatt wird unter dem Begriff Titelseite eine Oberflächenseite der Substratschicht verstanden, welche beispielsweise mit einem Druck und/oder Sicherheitsdruck versehen ist, wie beispielsweise eine Ausweisnummer oder ein Staatswappen. Gegenüberliegend zur Titelseite ist die Datenseite vorgesehen, welche wie beispielsweise ein Bild und/oder Personalisierdaten oder Firmendaten oder sonstige Layouts, insbesondere Daten umfassen kann.

Bevorzugt ist vorgesehen, dass die Vergussmasse einseitig auf die Faserverbundschicht aufgebracht ist und eine Eindringtiefe der Vergussmasse in die Faserverbundschicht von wenigstens 50 %, insbesondere wenigstens 70 % der Dicke der Faserverbundschicht umfasst. Dadurch wird eine einseitige Einbindung eines Drucks auf der Faserverbundschicht durch die Vergussmasse ermöglicht.

Bevorzugt ist vorgesehen, dass die einseitig auf die Faserverbundschicht aufgebrachte Vergussmasse sich vollflächig zur getränkten Faserverbundschicht erstreckt und eine Abdeckschicht auf der Faserverbundschicht bildet. Dadurch kann eine vollständige Versiegelung dieser einen Seite der Faserverbundschicht ermöglicht werden und auch ein nur teilweises Abschälen, insbesondere des Bereichs auf dem sich der Druck auf der Faserverbundschicht befindet, verhindert werden.

Gemäß einer bevorzugten Ausgestaltung des Datenblatts ist vorgesehen, dass ein druckbarer Oberflächenbereich der Datenseite vergussmassenfrei verbleibt. Dadurch wird ein Datenblatt bereitgestellt, welches eine dezentrale Personalisierung ermöglicht. Die Datenseite wird zu einem späteren Zeitpunkt bedruckt und kann mit einem auf der aufzubringenden Schicht aufgebrachten Klebemittel gefüllt und abgedeckt sein.

Bevorzugt wird für die Vergussmasse ein flüssiges oder pastenförmiges Klebemittel verwendet. Beispielsweise kann ein UV-vernetzbares oder thermisch vernetzbares Acrylat vorgesehen sein. Weitere typische Klebemittel, wie beispielsweise ein- oder zweikomponentige Polyurethane, Urethanacrylate, Epoxidharze, können ebenso vorgesehen sein. Bevorzugt wird für die Vergussmasse ein ein- oder zweikomponentiges Klebemittel verwendet, um das freie Volumen innerhalb der Faserschicht auszufüllen und die einzelnen Fasern fest miteinander zu verbinden. Des Weiteren können auch sogenannte Hotmelt-Klebestoffe eingesetzt werden.

Die für die Kernlage vorgesehene Faserverbundschicht kann aus einer zufälligen Anordnung von Fasern bestehen, wie beispielsweise einem flächigen Faserbündel, einem Fasernetzwerk, einer flächigen Faseranordnung, insbesondere einem Vlies, einem Filz, einem Papier, ein Gelege oder einer zellulosehaltigen Schicht. Vorteilhafterweise kann die Faserverbundschicht aus Naturfasern, Kunstfasern als auch einer Mischung hiervon bestehen. Die Faserverbundschicht kann auch ein- oder beidseitig einen sogenannten Strich zur Verbesserung der Bedruckbarkeit aufweisen. Dieser besteht aus saugfähigen mineralischen Füllstoffen, beispielsweise Kaolin, Kreide, Titandioxid und anderem und einem Bindemittel, beispielsweise Kasein. Die Fasern in der Faserverbundschicht haben üblicherweise einen Zusammenhalt über Verschlingungen/Verfilzungen, können aber auch eine zusätzliche Fixierung über ein Bindemittel aufweisen; beispielsweise mittels Dispersionen von Polyvinylacetat, Polyvinylacetat-Copolymer, PUR, Polyacrylaten, Polystyrol, Methylcellulose unter anderem sowie Mischungen daraus.

Eine weitere bevorzugte Ausführungsform der Faserverbundschicht sieht vor, dass diese aus Fasern mit einer Faserlänge von wenigstens 5 bis 50 mm beispielsweise im Falle von PP-, PET- oder PA-Fasern. Bei Gelege können Fasern mit einer Endlosfasercharakteristik eingesetzt werden, jedenfalls mit einer Länge von mehr als 50 mm. Dadurch kann ein verstärkter Zusammenhalt zwischen den einzelnen Fasern geschaffen sein.

Die nicht getränkte Faserverbundschicht der Substratlage des Datenblatts wird bevorzugt als Schicht mit einem Flächengewicht von 50 - 300 g/m², bevorzugt 90 - 180 g/m², eingebracht und weist für Papiere auf Cellulosebasis und gestrichene Kunstfasersubstrate bevorzugt eine Porosität von 50 - 800 ml (nach Bendtsen) auf. In einer anderen Ausführungsform können ungestrichene langfasrige Kunstfasersubstrate mit einer Luftdurchlässigkeit bis 200 l/m²s vorgesehen sein. Die Luftdurchlässigkeit kann nach Westerteiger gemäß der DIN 53 887 bestimmt werden. Bei cellulosebasierten Papieren wird vorteilhafterweise eine Fasermischung von min. 20 % Fasern von 10 mm oder länger verwendet, bei kunstfaserbasierten Substraten min. 40 % von 10 mm oder länger. In einer besonders vorteilhaften Ausführung weisen > 80 % der Kunstfasern eine Länge von 15 - 50 mm auf. Eine vergrößerte Oberfläche der Schichten ist von Vorteil, da die Aufnahmefähigkeit beziehungsweise Saugfähigkeit für die Aufnahme der Vergussmasse verbessert wird, um eine oder mehrere Schichten miteinander zu verbinden.

Das Datenblatt kann nach dem Tränken der Faserverbundschicht mit der Vergussmasse eine Luftdurchlässigkeit von bis zu 200 l/m²s aufweisen, anders ausgedrückt eine Porosität von < 5 ml/min, aufweisen. Darüber hinaus kann wiederum eine vergrößerte Oberfläche für eine verbesserte Anbindung weiterer Schichten gegeben sein.

Zum Erschweren der Manipulation weist die Faserverbundschicht bevorzugt zumindest ein Sicherheitsmerkmal auf. Beispielsweise können ein Wasserzeichen, chemische Reagenzien, Melierfasern, Personalisierungstinte, eine oder mehrere Substanzen aus Materialien aus der Gruppe bestehend aus Farbpigmenten, Effektpigmenten, optisch variablen Pigmenten und/oder Lumineszenzsubstanzen oder -pigmenten oder Fluoreszenzsubstanzen oder -pigmenten vorgesehen sein.

Das Datenblatt kann eine Substratlage aus einer Faserverbundschicht umfassen, welche sich an einer Seitenkante der Daten- und Titelseite darüber hinaus zur Bildung einer Lasche erstreckt. Dadurch kann das Datenblatt als Einlageblatt für ein buchartiges Wert- und/oder Sicherheitsdokument ausgebildet sein. Bevorzugt kann die Lasche einseitig mit der Vergussmasse getränkt sein. Es kann vorgesehen sein, dass die Lasche des Datenblatts frei von Vergussmasse und mit einem Binder gestärkt ist. Dieses Datenblatt kann im Falle einer nur einseitigen Einbringung einer Vergussmasse in ein buchartiges oder Wert- oder Sicherheitsdokument für die dezentrale Personalisierung eingebracht sein.

Des Weiteren ist bevorzugt vorgesehen, dass zumindest eine Folienschicht, welche zumindest ein holographisches Sicherheitselement und/oder Personalisierdaten aufweist, auf die Abdeckschicht aufgebracht ist. Dadurch können eine Erhöhung der Fälschungssicherheit und/oder eine zusätzliche Personalisierung ermöglicht sein.

Auf dieser zumindest einen Folienschicht mit zumindest einem holographischen Sicherheitsmerkmal ist bevorzugt eine strukturierte Schicht, insbesondere Lackschicht, aufgebracht, welche sich zumindest in Teilen des Bereiches der Datenseiten erstreckt, um das oder die Personalisierungsmerkmale in der zumindest einen Folienschicht gegen Manipulationen abzusichern.

Eine weitere bevorzugte Ausgestaltung des Datenblatts sieht vor, dass die Substratschicht aus zwei oder wenigstens zwei Lagen von Faserverbundschichten besteht, zwischen denen zumindest ein technisches Bauteil, insbesondere eine bedruckte Antenne, vorgesehen ist und die beiden Faserverbundschichten durch die Vergussmasse miteinander verbunden sind. Durch das Einbringen der Vergussmasse, welche mit Fasern der Faserverbundschicht eine Matrix bildet, ist auch ermöglicht, dass eine einheitliche Substratschicht aus zwei oder mehreren übereinander liegenden Faserverbundschichten gebildet sein kann, um technische Elemente und/oder Sicherheitsmerkmale einzubringen und untrennbar einzubinden. In diesem Fall ist bevorzugt vorgesehen, die Verfüllung in einem ersten Schritt von der Grenzfläche zwischen den beiden Faserschichten zu beginnen. Bevorzugt wird eine Penetrierzone in einer oder beiden Faserschichten ausgebildet, um eine Personalisierung oder Nummerierung der Daten- und Titelseite vor dem Versiegeln der Oberflächen durch Verfüllung zu erlauben. Bevorzugt ist vorgesehen, für diese innere Grenzfläche eine Vergussmasse zu verwenden, die der gleichen Stoffgruppe angehört wie die Vergussmasse zur äußeren Verfüllung, um eine starke Verbindung entlang der beiden Penetrierzonen zu erhalten. Verfahrenstechnisch kann es jedoch vorteilhaft sein, beispielsweise ein thermisch vernetzendes Acrylat für die innere Grenzfläche und ein UV-vernetzendes für die Verfüllung der Oberflächen zu verwenden.

Die der Erfindung zugrunde liegende Aufgabe wird des Weiteren durch ein in Anspruch 12 definiertes Verfahren zur Herstellung eines Datenblatts für ein Sicherheitsdokument gelöst.

Bevorzugt ist vorgesehen, dass auf die Titelseite zumindest ein Druck, insbesondere ein Sicherheitsdruck, vorzugsweise mit einem Offset- oder Inkjetdruckverfahren aufgebracht wird und die Titelseite der Vergussmasse getränkt wird, so dass die Datenseite vergussmassenfrei bleibt. Die Menge der Vergussmasse zur Tränkung der Faserverbundschicht wird an die Dicke der Faserverbundschicht, die Struktur der Faserverbundschicht und/oder der Saugfähigkeit der Faser angepasst, um somit ein Datenblatt zu bilden, welches für eine dezentrale Personalisierung einsetzbar ist.

Zur dezentralen Personalisierung ist vorgesehen, dass das Datenblatt, welches eine vergussfreie Datenseite umfasst, dezentral mit Daten, insbesondere Personalisierdaten bedruckt wird, wie beispielsweise durch ein Inkjet-Verfahren und anschließend mit einem Klebemittel gefüllt und mit einer Schutzfolie abgedeckt wird. Durch das noch verbleibende freie Volumen an der Oberfläche der Datenseite kann durch das Aufbringen eines Klebemittels oder einer Klebstoffschicht zur Fixierung einer Schicht oder einer mit einem Klebemittel beschichteten Schicht wiederum eine unlösbare Anordnung zwischen der Faserverbundschicht und der Klebstoffschicht erfolgen, um die aufgebrachten Daten sicher einzubinden.

Nach einer alternativen Ausgestaltung des Verfahrens ist vorgesehen, dass zumindest ein Druck auf die Titelseite und ein Druck insbesondere Personalisierdaten auf die Datenseite aufgedruckt werden, und die Faserverbundschicht getränkt wird, so dass die Titelseite mit einer Abdeckschicht versiegelt ist. Dieses Verfahren wird bei einer zentralen Personalisierung der Datenseite eingesetzt.

Eine weitere alternative Ausgestaltung des Verfahrens sieht vor, dass nach dem Bedrucken der Titel- und Datenseite der Faserverbundschicht auf beiden Seiten der Faserverbundschicht jeweils eine Schicht aus einem thermoplastischen Polymer zusammengeführt wird und das Datenblatt durch diese Schicht abgedeckt ist. Bei dieser Schicht kann es sich um eine Folienschicht mit holographischen Sicherheitsmerkmalen und/oder Personalisierdaten handeln.

Die der Erfindung zugrunde liegende Aufgabe wird des Weiteren durch ein Wert- und/oder Sicherheitsdokument gelöst, bei welchem das vorbeschriebene Datenblatt eingebracht ist. Beispielsweise kann das Wert- und/oder Sicherheitsdokument als buchartiges Wert- und oder Sicherheitsdokument ausgebildet sein, wobei das Datenblatt mit einer Lasche oder einer weiteren Seite ausgebildet ist, um dieses Datenblatt in das buchartige Wert- und/oder Sicherheitsdokument einzubinden. Alternativ kann vorgesehen sein, dass dieses Datenblatt für einen kartenförmigen Datenträger verwendet wird, wie beispielsweise im ID1-Format für einen Personalausweis.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden, soweit dies in den Schutzbereich der Ansprüche fällt. Es zeigen:
Figuren 1a und 1b eine schematische Schnittansicht und eine schematische Draufsicht auf ein nicht erfindungsgemäßes Datenblatt,
Figur 2a eine schematische Schnittansicht einer nicht erfindungsgemäßen alternativen Ausführungsform des Datenblatts zu Figur 1 ohne Vergussmasse,
Figur 2b eine schematische Schnittansicht einer nicht erfindungsgemäßen alternativen Ausführungsform zu Figur 2a mit einer in die Faserverbundschicht einpenetrierten Vergussmasse,
Figur 3 eine schematische Schnittansicht des Datenblattes für eine dezentrale Personalisierung,
Figur 4 eine schematische Schnittansicht des Datenblatts gemäß Figur 3 nach erfolgter dezentraler Personalisierung,
Figur 5 eine schematische Ansicht auf ein als Einlageblatt ausgebildetes Datenblatt und
Figur 6 eine schematische Schnittansicht der entlang der Linie V-V in Figur 5.

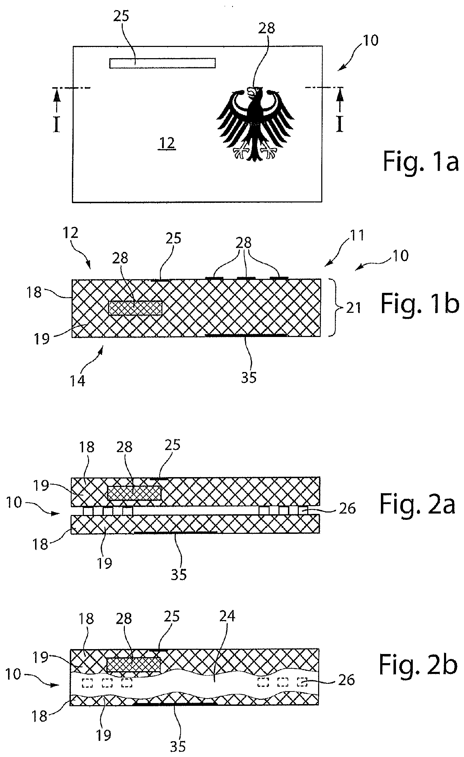

In Figur 1a ist eine schematische Seitenansicht auf ein Datenblatt 10 dargestellt. Die Figur 1b zeigt eine schematische Schnittansicht entlang der Linie 1-I in Figur 1a. Ein solches Datenblatt 10 kann als Zwischen- oder Endprodukt eines kartenförmigen Datenträgers, wie beispielsweise eine Kreditkarte, ein Personalausweis oder dergleichen eingesetzt werden. Das Datenblatt 10 umfasst eine Substratschicht 11, welche aus einer Faserverbundschicht 18 und einer Vergussmasse 19 besteht, durch welche die Faserverbundschicht 18 getränkt ist. Dabei ist bevorzugt vorgesehen, dass wenigstens 50% des freien Volumens der Faserverbundschicht 18 durch die Vergussmasse 19 getränkt sind, um einen formschlüssigen Verbund zwischen den Fasern der Faserverbundschicht 18 und der Vergussmasse 19 zu bilden. Dadurch kann eine Delaminierresistenz verstärkt werden.

Die Faserverbundschicht 18 kann aus einer Faserschicht aus einer zufälligen Anordnung von Fasern bestehen, wie beispielsweise einem flächigen Faserbündel, einem Fasernetzwerk oder einer flächigen Faseranordnung, insbesondere einem Vlies oder einem Filz, Papierfasern, Baumwollfasern und/oder Cellulosefasern.

Die Faserverbundschicht 18 kann aus reinen Naturfasern oder reinen Kunstfasern wie beispielsweise Polyesterfasern, Polyamidfasern oder Polypropylenfasern oder einer Kombination beziehungsweise aus einer Mischung aus Natur- und Kunststofffasern ausgebildet sein.

Die Vergussmasse 19 ist ein flüssiges oder pastenförmiges Klebemittel, welches ein- oder zweikomponentig ausgebildet sein kann. Gemäß einer ersten Ausführungsform wird ein UV-vernetzbares Acrylat eingesetzt.

Die Faserverbundschicht 18 ist derart ausgebildet, dass diese mit einem Inkjet-Verfahren oder Offset-Verfahren bedruckbar ist, um darauf beispielsweise einen Druck 25 auf einer Titelseite 12 aufzubringen. Auf der Titelseite 12 kann alleine oder zusätzlich auch ein Sicherheitsmerkmal 28 vorgesehen sein. Des Weiteren kann auf einer der Titelseite 12 gegenüberliegenden Datenseite 14 ein weiterer Druck 35 aufgebracht sein.

Auf der Datenseite 14 kann der Druck 35 durch eine Bild und/oder weitere Layouts und/oder Personalisierdaten gebildet sein.

Ergänzend können auf die Titelseite 12 oder Datenseite 14 ein oder mehrere Sicherheitsmerkmale 28 aufgebracht werden. Hierbei kann es sich beispielsweise um Wasserzeichen, Melierfasern, chemische Reagenzien, Sicherheitsfäden oder sonstige Pigmente oder Substanzen handeln. Beispielsweise ist in Figur 1b ein in die Faserverbundschicht 18 eingebrachter Sicherheitsfaden als Sicherheitsmerkmal 28 schematisch dargestellt.

Bei einer ersten Ausführungsform kann die Faserverbundschicht 18 mit der Vergussmasse 19 ein- oder beidseitig derart getränkt sein, dass an der jeweiligen Oberfläche der Titel- und Datenseite 12, 14 eine Rauigkeit entsteht, welche durch die gegenüber der Vergussmasse 19 vorstehenden Fasern der Faserverbundschicht 18 gebildet ist. Das Aufbringen der Vergussmasse 19 auf die Faserverbundschicht 18 kann von einer der beiden Seiten oder von beiden Seiten gleichzeitig erfolgen, wobei vor dem Tränken der Faserverbundschicht 18 mit der Vergussmasse 19 die erforderlichen Aufdrucke auf die Titelseite 12 und/oder Datenseite 14 erfolgen. Ein solches in den Figuren 1a und b beschriebenes Datenblatt 10 bildet beispielsweise ein Zwischenprodukt, welches durch das ein- oder beidseitige Aufbringen von einer oder weiteren Schichten auf die Titelseite 12 und/oder Datenseite 14 fertiggestellt wird.

In Figur 2a ist eine schematische Schnittansicht eines alternativen Datenblatts 10 zu den Figuren 1a und 1b dargestellt. Dieses Datenblatt 10 weist eine Substratschicht 11 auf, welche beispielsweise zwei Faserverbundschichten 18 umfasst. Auf eine der beiden Faserverbundschichten 18 ist beispielsweise eine Antenne 26, insbesondere eine gedruckte Antenne 26, aufgebracht, welche zwischen den beiden Faserverbundschichten 18 eingebettet ist. Anschließend kann, wie beispielsweise zum Datenblatt 10 gemäß Figur 1 beschrieben ist, auf der Titel- und/oder Datenseite 12, 14 ein Druck 25, 35 und/oder Sicherheitsmerkmal 28 aufgebracht werden, bevor die Faserverbundschichten 18 mit der Vergussmasse 19 getränkt werden. Durch die Penetrierung der Vergussmasse 19 in die zwei Faserverbundschichten 18 gemäß einer ersten Ausführungsform von außen auf die Datenseite 14 oder Titelseite 13 oder beiden kann ein formschlüssiger Verbund auch zwischen diesen beiden Faserverbundschichten 18 unter Einbindung der technischen Komponente, wie beispielsweise Antenne, erfolgen, so dass diese Schnittstelle zwischen den beiden Faserverbundschichten 18 mit einer hohen Spaltfestigkeit ausgebildet ist.

In Figur 2b ist eine alternative Ausführungsform zu Figur 2a dargestellt. Bevor die beiden Faserverbundschichten 18 zusammen geführt werden, wird auf einer oder beiden aufeinander zuweisenden Seiten der Faserverbundschichten 18, die miteinander verbunden werden, eine Vergussmasse 19 aufgebracht, so dass beim Zusammenführen der beiden Faserverbundschichten 18 bezüglich einer vorbestimmten Dicke eine Penetrierzone in jeder der Faserverbundschichten 18 gebildet wird, welche von der Mitte, also der Antenne 26, ausgehend, sich nach außen erstreckt. Ein solches Datenblatt 10 kann, sofern die beiden Faserverbundschichten 18 noch nicht vollständig getränkt sind, nachträglich von außen mit einer Vergussmasse 19 verfüllt werden.

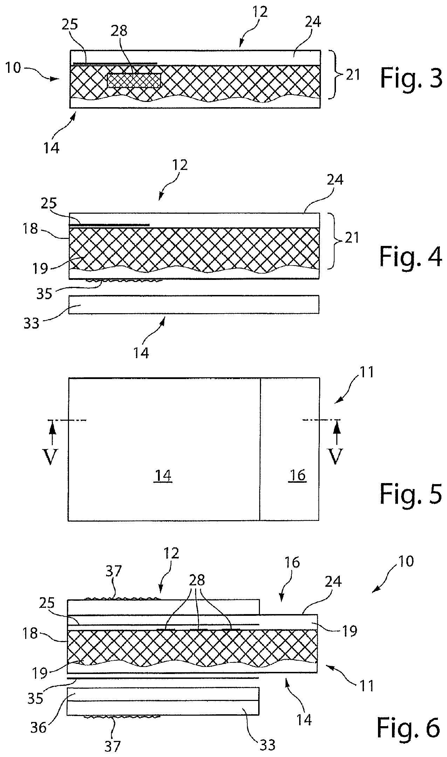

In Figur 3 ist eine alternative Ausführungsform des Datenblatts 10 zu Figur 1 dargestellt. Bei dieser Ausführungsform ist die Vergussmasse 19 nur einseitig auf die Faserverbundschicht 18 aufgetragen, um in der Faserverbundschicht 18 eine Penetrierzone 21 zu bilden, welche sich nicht vollständig von der Titelseite 12 bis zur Datenseite 14 erstreckt, so dass ein Oberflächenbereich der Faserverbundschicht 18 auf der Datenseite 14 vergussmassenfrei ist. Vor dem Aufbringen der Vergussmasse 19 ist die Titelseite 12 mit zumindest einen Druck 25 und/oder Sicherheitsmerkmal 28 fertiggestellt. Die Datenseite 14 kann unbehandelt bleiben oder nur teilweise bearbeitet sein. Jedenfalls ist diese nicht fertiggestellt. Dadurch wird ein Datenblatt 10 für eine dezentrale Personalisierung geschaffen.

Bei dieser Ausführungsform gemäß Figur 3 kann vorgesehen sein, dass die Vergussmasse 19 derart ausgebildet ist, dass diese gegenüber der Titelseite 12 eine geschlossene Abdeckschicht 24 bildet, so dass eine im Wesentlichen glatte Oberfläche gebildet ist bzw. die Rauigkeit der Oberfläche durch die Vergussmasse 19 bestimmt wird. Dadurch wird die Titelseite 12 durch die Vergussmasse 19 versiegelt. Alternativ kann die Titelseite 12 auch mit einer Rauigkeit versehen sein, wie dies in Figur 1b beschrieben ist.

In Figur 4 ist eine schematische Schnittansicht des Datenblatts 10 gemäß Figur 3 nach der dezentralen Personalisierung dargestellt. Bei dieser dezentralen Personalisierung wird mittels eines Druckverfahrens, wie beispielsweise Offset- oder Inkjet-Druckverfahren, die Datenseite 14 mit Daten, insbesondere Personalisierdaten, bedruckt und fertiggestellt. Anschließend wird das noch freie Volumen der Faserverbundschicht 18 mit einem Klebemittel befüllt, um die Faserverbundschicht 18 mit einer Folienschicht 33 zu schließen. Diese Folienschicht 33 kann insbesondere holografische Sicherheitsmerkmale 28 und/oder Personalisierdaten aufweisen. Zum Schließen der Datenseite 14 kann auf der Folienschicht 33 auch ein Klebemittelfilm genügen, der lediglich auf die Datenseite 14 aufgebracht wird.

In Figur 5 ist eine schematische Draufsicht auf ein Datenblatt 10 dargestellt, welches als Einlageblatt für ein buchartiges Wert- und/oder Sicherheitsdokument vorgesehen ist.

Figur 6 zeigt eine Schnittansicht entlang der Linie IV-V in Figur 5 für beispielsweise eine Ausführungsform eines solchen Einlageblattes auf der Basis des zuvor beschriebenen Datenblattes 10.

Das Datenblatt 10 umfasst eine sich an die Titelseite 12 bzw. Datenseite 14 anschließende Lasche 16, welche zum Einbinden in ein nicht näher dargestelltes buchartige Wert- und/oder Sicherheitsdokument vorgesehen ist. Diese Lasche 16 kann vergussmassenfrei ausgebildet sein, so dass ein unmittelbares Einnehmen des Einlageblattes durch die Faserverbundschicht 18, welche die Substratschicht 11 des Datenblatts 10 bildet, ermöglicht ist. Erfindungsgemäß ist, wie in Figur 6 dargestellt, vorgesehen, dass die Faserverbundschicht 18 einseitig mit der Vergussmasse 19 getränkt ist. Alternativ kann auch eine einseitige Tränkung der Lasche 16 durch die Vergussmasse 19 vorgesehen sein. Bei einer beispielsweise dezentralen Personalisierung wird ein Datenblatt 10 gemäß Figur 3 mit einer Lasche 16 ausgebildet und kann zusätzlich noch mit einer Prägung oder einer strukturierten Lackschicht 37 auf der Abdeckschicht 24 der Titelseite 12 versehen sein. Dieses in das buchartige Wert- und/oder Sicherheitsdokument eingebundene Datenblatt 10 wird dezentral auf der Datenseite 14 durch den Druck 35 fertig gestellt, insbesondere personalisiert. Anschließend wird eine Klebemittelschicht 36 aufgebracht, welche in die Datenseite 14 penetriert, um eine Matrix mit den Fasern der Faserverbundschicht 18 zu bilden, um die Datenseite 14 mit der darauf aufgebrachten Folienschicht 33 zu verschließen. Diese weist vorzugsweise holografische Sicherheitsmerkmale und/oder Personalisierdaten auf. Zusätzlich kann noch ein strukturierter Lack 37 aufgebracht sein.

10. Datenblatt
11. Substratschicht
12. Titelseite
14. Datenseite
16. Überstand
18. Faserverbundschicht
19. Vergussmasse
21. Penetrierzone
24. Oberfläche
25. Druck
26. Antenne
28. Sicherheitsmerkmal
33. Folienschicht
35. Druck
36. Klebemittelschicht
37. Strukturierte Lackschicht

## Patentansprüche

1. Datenblatt für ein Wert- und/oder Sicherheitsdokument, mit einer Substratschicht (11) zur Bildung einer Titelseite (12) und einer gegenüberliegenden Datenseite (14), wobei die Substratschicht (11) aus einer Faserverbundschicht (18) besteht, welche mit zumindest einem auf einer Titelseite (12) und/oder Datenseite (14) angeordneten Druck (25, 35) und/oder Sicherheitsmerkmal (28) ausgebildet ist und mit einer Vergussmasse (19) getränkt ist, wobei wenigstens 50 % des freien Volumens der Faserverbundschicht (18) mit der Vergussmasse (19) gefüllt ist, wobei auf der Titelseite (12) ein Druck (25) und/oder Sicherheitsmerkmal (28) aufgebracht ist, **dadurch gekennzeichnet, dass** auf die Titelseite (12) der Faserverbundschicht (18) die Vergussmasse (19) aufgebracht ist, wobei die Datenseite (14) vergussmassenfrei ist.

2. Datenblatt nach Anspruch 1, **dadurch gekennzeichnet, dass** die Vergussmasse (19) einseitig auf die Faserverbundschicht (18) aufgebracht ist und eine Eindringtiefe in die Faserverbundschicht (18) von wenigstens 50 %, insbesondere wenigstens 70 % der Dicke der Faserverbundschicht (18) umfasst.

3. Datenblatt nach Anspruch 1 oder 2, **dadurch gekennzeichnet, dass** sich die einseitig auf die Faserverbundschicht (18) aufgebrachte Vergussmasse (19) vollflächig zur getränkten Faserverbundschicht (18) erstreckt und eine Abdeckschicht (24) auf der Faserverbundschicht (18) bildet.

4. Datenblatt nach einem der vorhergehenden Ansprüche, **dadurch gekennzeichnet, dass** ein bedruckbarer Oberflächenbereich der Datenseite (14) vergussmassenfrei ist.

5. Datenblatt nach Anspruch 1, **dadurch gekennzeichnet, dass** die Vergussmasse (19) ein flüssiges oder pastenförmiges Klebemittel, insbesondere ein ein- oder zweikomponentiges Klebemittel, vorzugsweise ein UV-vernetzbares Acrylat, ist.

6. Datenblatt nach Anspruch 1, **dadurch gekennzeichnet, dass** die Faserverbundschicht (18) aus einer zufälligen Anordnung von Fasern, insbesondere einem flächigen Faserbündel, einem Fasernetzwerk oder einer flächigen Faseranordnung, vorzugsweise einem Vlies, einem Gelege, einem Filz oder einem Papier besteht.

7. Datenblatt nach Anspruch 1, **dadurch gekennzeichnet, dass** die Fasern der Faserverbundschicht (18) eine Faserlänge von wenigstens 5 bis 50 mm umfassen oder dass die Fasern der Faserverbundschicht (18) bei einem Gelege eine Faserlänge von größer als 50 mm aufweisen.

8. Datenblatt nach Anspruch 1, **dadurch gekennzeichnet, dass** die Faserverbundschicht (18) eine Porosität von 50-1000 ml/min nach Bendtsen aufweist und/oder dass die Faserverbundschicht (18) eine Luftdurchlässigkeit bis zu 200 l/m²s aufweist, und/oder dass die Faserverbundschicht (18) ein Flächengewicht von 50 - 300 g/m², bevorzugt 90 - 180 g/m², aufweist.

9. Datenblatt nach einem der vorhergehenden Ansprüche, **dadurch gekennzeichnet, dass** sich die Faserverbundschicht (18) an einer Seitenkante der Titel- und Datenseite hervorstehend zur Bildung einer Lasche (16) erstreckt und vorzugsweise dass die Lasche (16) frei von Vergussmasse (19) ist oder einseitig mit der Vergussmasse (19) getränkt ist.

10. Datenblatt nach einem der vorhergehenden Ansprüche, **dadurch gekennzeichnet, dass** auf die Titelseite (12) und/oder Datenseite (14) zumindest eine Folienschicht (33), welche zumindest ein holografisches Sicherheitsmerkmal und/oder Personalisierdaten aufweist, aufgebracht ist und vorzugsweise, dass auf die zumindest eine Folienschicht (33) eine strukturierte Lackschicht (37) aufgebracht ist.

11. Datenblatt nach einem der vorhergehenden Ansprüche, **dadurch gekennzeichnet, dass** die Substratschicht (11) aus wenigstens zwei Lagen von Faserverbundschichten (18) besteht, zwischen denen zumindest ein technisches Bauteil, insbesondere eine bedruckte Antenne, vorgesehen ist und die Faserverbundschichten (18) durch die Vergussmasse (19) miteinander verbunden sind.

12. Verfahren zur Herstellung eines Datenblattes für ein Sicherheitsdokument, bei dem eine Substratschicht (11) aus zumindest einer Faserverbundschicht (18) bereitgestellt wird, bei dem auf eine Titelseite (12) und/oder Datenseite (14) der Faserverbundschicht (18) ein Druck (25, 35) und/oder Sicherheitsmerkmal (28) aufgebracht wird, so dass darauffolgend die Faserverbundschicht (18) mit einer Vergussmasse (19) getränkt wird, wobei wenigstens 50 % des freien Volumens der Faserverbundschicht (18) mit der Vergussmasse (19) ein- oder beidseitig getränkt ist, wobei auf der Titelseite (12) ein Druck (25) und/oder Sicherheitsmerkmal (28) aufgebracht wird, **dadurch gekennzeichnet, dass** auf die Titelseite (12) der Faserverbundschicht (18) die Vergussmasse (19) aufgebracht wird, wobei die Datenseite vergussmassenfrei ist.

13. Verfahren nach Anspruch 12, **dadurch gekennzeichnet, dass** auf die Titelseite (12) zumindest ein Druck (25), insbesondere ein Sicherheitsdruck, vorzugsweise mit einem Offset- oder Inkjet-Druckverfahren, aufgebracht wird, dass auf die Titelseite (12) Vergussmasse (19) aufgebracht und die Faserverbundschicht (18) getränkt wird, so dass eine Datenseite für eine dezentrale Personalisierung vergussmassenfrei bleibt und vorzugsweise dass das Datenblatt (10) bei der dezentralen Personalisierung auf der Datenseite (14) bedruckt, insbesondere personalisiert, wird und anschließend mit einer Klebstoffschicht gefüllt und mit einer Folienschicht (33) beschichtet wird.

14. Verfahren nach Anspruch 12, **dadurch gekennzeichnet, dass** zumindest ein Druck (25) auf die Titelseite (12) und ein Druck (35), insbesondere Personalisierdaten, auf die Datenseite (14) aufgebracht werden und die Faserverbundschicht (18) mit der Vergussmasse (19) getränkt wird, so dass die Titelseite (12) mit einer Abdeckschicht (24) versiegelt ist oder dass die Faserverbundschicht (18) und beidseitig zur Faserverbundschicht (18) jeweils zumindest eine weitere Folienschicht (33) aus einem thermoplastischen Polymer zusammengeführt werden und durch das Zusammenführen der Folienschichten (33) die Faserverbundschicht (18) abgedeckt wird.

15. Wert- und/oder Sicherheitsdokument, **dadurch gekennzeichnet, dass** dieses zumindest ein Datenblatt (10) nach einem der Ansprüche 1 bis 11 umfasst.

## Claims

1. Data sheet for a document of value and/or security document, having a substrate layer (11) for forming a title side (12) and an opposite data side (14), wherein the substrate layer (11) consists of a fibre composite layer (18) which is configured with at least one printed item (25, 35) and/or security feature (28) arranged on a title side (12) and/or data side (14) and is impregnated with a sealing composition (19), wherein at least 50% of the free volume of the fibre composite layer (18) is filled with the sealing composition (19), wherein a printed item (25) and/or security feature (28) is applied to the title side (12), **characterised in that** the sealing composition (19) is applied to the title side (12) of the fibre composite layer (18), wherein the data side (14) is free of sealing composition.

2. Data sheet according to claim 1, **characterised in that** the sealing composition (19) is applied to the fibre composite layer (18) on one side and has a depth of penetration into the fibre composite layer (18) of at least 50%, in particular at least 70%, of the thickness of the fibre composite layer (18).

3. Data sheet according to claim 1 or 2, **characterised in that** the sealing composition (19) applied to the fibre composite layer (18) on one side extends over the entire surface of the impregnated fibre composite layer (18) and forms a cover layer (24) on the fibre composite layer (18).

4. Data sheet according to any one of the preceding claims, **characterised in that** a printable surface region of the data sheet (14) is free of sealing composition.

5. Data sheet according to claim 1, **characterised in that** the sealing composition (19) is a liquid or pasty adhesive, in particular a one- or two-component adhesive, preferably a UV-crosslinkable acrylate.

6. Data sheet according to claim 1, **characterised in that** the fibre composite layer (18) consists of a random arrangement of fibres, in particular a large-area fibre bundle, a fibre network or a large-area fibre arrangement, preferably a nonwoven, a non-crimped fabric, a felt or a paper.

7. Data sheet according to claim 1, **characterised in that** the fibres of the fibre composite layer (18) have a fibre length of at least from 5 to 50 mm, or **in that** the fibres of the fibre composite layer (18) in the case of a non-crimped fabric have a fibre length greater than 50 mm.

8. Data sheet according to claim 1, **characterised in that** the fibre composite layer (18) has a porosity of from 50 to 1000 ml/min according to Bendtsen, and/or **in that** the fibre composite layer (18) has an air permeability of up to 200 l/m²s, and/or **in that** the fibre composite layer (18) has a weight per unit area of from 50 to 300 g/m², preferably from 90 to 180 g/m².

9. Data sheet according to any one of the preceding claims, **characterised in that** the fibre composite layer (18) protrudes at a lateral edge of the title and data side to form a tab (16), and preferably **in that** the tab (16) is free of sealing composition (19) or is impregnated with the sealing composition (19) on one side.

10. Data sheet according to any one of the preceding claims, **characterised in that** there is applied to the title side (12) and/or data side (14) at least one film layer (33) which has at least one holographic security feature and/or personalisation data, and preferably **in that** a structured lacquer layer (37) is applied to the at least one film layer (33) .

11. Data sheet according to any one of the preceding claims, **characterised in that** the substrate layer (11) consists of at least two plies of fibre composite layers (18), between which at least one technical component, in particular a printed antenna, is provided, and the fibre composite layers (18) are bonded together by the sealing composition (19) .

12. Method for producing a data sheet for a security document, in which a substrate layer (11) of at least one fibre composite layer (18) is provided, in which a printed item (25, 35) and/or security feature (28) is applied to a title side (12) and/or data side (14) of the fibre composite layer (18) so that the fibre composite layer (18) is subsequently impregnated with a sealing composition (19), wherein at least 50% of the free volume of the fibre composite layer (18) is impregnated with the sealing composition (19) on one side or on both sides, wherein a printed item (25) and/or a security feature (28) is applied to the title side (12), **characterised in that** the sealing composition (19) is applied to the title side (12) of the fibre composite layer (18), wherein the data side is free of sealing composition.

13. Method according to claim 12, **characterised in that** at least one printed item (25), in particular a printed security item, is applied to the title side (12), preferably by an offset or inkjet printing process, **in that** sealing composition (19) is applied to the title side (12) and the fibre composite layer (18) is impregnated so that a data sheet for decentralised personalisation remains free of sealing composition, and preferably **in that** the data sheet (10), when personalised decentrally, is printed, in particular personalised, on the data side (14) and then filled with an adhesive layer and coated with a film layer (33).

14. Method according to claim 12, **characterised in that** at least one printed item (25) is applied to the title side (12) and a printed item (35), in particular personalisation data, is applied to the data side (14), and the fibre composite layer (18) is impregnated with the sealing composition (19) so that the title side (12) is sealed with a cover layer (24), or **in that** the fibre composite layer (18) and on both sides of the fibre composite layer (18) in each case at least one further film layer (33) of a thermoplastic polymer are brought together and, by bringing the film layers (33) together, the fibre composite layer (18) is covered.

15. Document of value and/or security document, **characterised in that** it comprises at least one data sheet (10) according to any one of claims 1 to 11.

## Revendications

1. Feuille de données pour un document de valeur et/ou de sécurité, comprenant une couche de substrat (11) pour former un côté titre (12) et un côté données (14) opposé, la couche de substrat (11) étant constituée d'une couche de composite renforcé par des fibres (18), qui est réalisée avec au moins une impression (25, 35) et/ou une caractéristique de sécurité (28) disposée sur un côté titre (12) et/ou côté données (14) et qui est imprégnée d'une masse de scellement (19), au moins 50 % du volume libre de la couche de composite renforcé par des fibres (18) étant rempli avec la masse de scellement (19), une impression (25) et/ou une caractéristique de sécurité (28) étant appliquée sur le côté titre (12), **caractérisée en ce que** la masse de scellement (19) est appliquée sur le côté titre (12) de la couche de composite renforcé par des fibres (18), le côté données (14) étant dénué de masse de scellement.

2. Feuille de données selon la revendication 1, **caractérisée en ce que** la masse de scellement (19) est appliquée d'un côté sur la couche de composite renforcé par des fibres (18) et présente une profondeur de pénétration dans la couche de composite renforcé par des fibres (18) d'au moins 50 %, en particulier d'au moins 70 % de l'épaisseur de la couche de composite renforcé par des fibres (18) .

3. Feuille de données selon la revendication 1 ou 2, **caractérisée en ce que** la masse de scellement (19) appliquée d'un côté sur la couche de composite renforcé par des fibres (18) s'étend sur toute la surface par rapport à la couche de composite renforcé par des fibres (18) imprégnée et forme une couche de recouvrement (24) sur la couche de composite renforcé par des fibres (18).

4. Feuille de données selon l'une des revendications précédentes, **caractérisée en ce qu'**une zone de surface imprimable du côté données (14) est dénuée de masse de scellement.

5. Feuille de données selon la revendication 1, **caractérisée en ce que** la masse de scellement (19) est une colle liquide ou pâteuse, en particulier une colle à un ou à deux composants, de préférence un acrylate réticulable sous UV.

6. Feuille de données selon la revendication 1, **caractérisée en ce que** la couche de composite renforcé par des fibres (18) est constituée d'une disposition aléatoire de fibres, en particulier d'un faisceau de fibres plan, d'un réseau de fibres ou d'une disposition de fibres plane, de préférence d'un non-tissé, d'une nappe, d'un feutre ou d'un papier.

7. Feuille de données selon la revendication 1, **caractérisée en ce que** les fibres de la couche de composite renforcé par des fibres (18) présentent une longueur de fibre d'au moins 5 à 50 mm ou **en ce que** les fibres de la couche de composite renforcé par des fibres (18) présentent, dans le cas d'une nappe, une longueur de fibre supérieure à 50 mm.

8. Feuille de données selon la revendication 1, **caractérisée en ce que** la couche de composite renforcé par des fibres (18) présente une porosité de 50 à 1000 ml/min selon Bendtsen et/ou **en ce que** la couche de composite renforcé par des fibres (18) présente une perméabilité à l'air allant jusqu'à 200 l/m²s, et/ou **en ce que** la couche de composite renforcé par des fibres (18) présente un grammage de 50 à 300 g/m², de préférence de 90 à 180 g/m².

9. Feuille de données selon l'une des revendications précédentes, **caractérisée en ce que** la couche de composite renforcé par des fibres (18) s'étend en saillie sur une arête latérale du côté titre et côté données pour former une patte (16) et de préférence **en ce que** la patte (16) est dénuée de masse de scellement (19) ou est imprégnée d'un côté de la masse de scellement (19).

10. Feuille de données selon l'une des revendications précédentes, **caractérisée en ce qu'**au moins une couche de feuille (33), qui comporte au moins une caractéristique de sécurité holographique et/ou des données de personnalisation, est appliquée sur le côté titre (12) et/ou le côté données (14), et de préférence **en ce qu'**une couche de vernis structurée (37) est appliquée sur l'au moins une couche de feuille (33).

11. Feuille de données selon l'une des revendications précédentes, **caractérisée en ce que** la couche de substrat (11) est constituée d'au moins deux épaisseurs de couche de composite renforcé par des fibres (18), entre lesquelles au moins un composant technique, en particulier une antenne imprimée, est prévu et les couches de composite renforcé par des fibres (18) sont reliées entre elles par la masse de scellement (19).

12. Procédé de fabrication d'une feuille de données pour un document de sécurité, dans lequel une couche de substrat (11) composée d'au moins une couche de composite renforcé par des fibres (18) est mise à disposition, dans lequel une impression (25, 35) et/ou une caractéristique de sécurité (28) est appliquée sur le côté titre (12) et/ou le côté données (14) de la couche de composite renforcé par des fibres (18), de sorte qu'ensuite, la couche de composite renforcé par des fibres (18) est imprégnée d'une masse de scellement (19), au moins 50 % du volume libre de la couche de composite renforcé par des fibres (18) étant imprégné d'un côté ou des deux côtés de la masse de scellement (19), une impression (25) et/ou une caractéristique de sécurité (28) étant appliquée sur le côté titre (12), **caractérisé en ce que** la masse de scellement (19) est appliquée sur le côté titre (12) de la couche de composite renforcé par des fibres (18), le côté données étant dénué de masse de scellement.

13. Procédé selon la revendication 12, **caractérisé en ce qu'**au moins une impression (25), en particulier une impression de sécurité, est appliquée sur le côté titre (12) de préférence au moyen d'un procédé d'impression offset ou à jet d'encre, **en ce que** de la masse de scellement (19) est appliquée sur le côté titre (12) et la couche de composite renforcé par des fibres (18) est imprégnée, de sorte qu'un côté données reste dénué de masse de scellement pour une personnalisation décentralisée et de préférence **en ce que** la feuille de données (10) est imprimée, en particulier personnalisée, sur le côté données (14) lors de la personnalisation décentralisée, puis remplie d'une couche de colle et revêtue d'une couche de feuille (33).

14. Procédé selon la revendication 12, **caractérisé en ce qu'**au moins une impression (25) est appliquée sur le côté titre (12) et une impression (35), en particulier des données de personnalisation, est appliquée sur le côté données (14) et la couche de composite renforcé par des fibres (18) est imprégnée de la masse de scellement (19), de sorte que le côté titre (12) est scellé avec une couche de recouvrement (24) ou **en ce que** la couche de composite renforcé par des fibres (18) et, des deux côtés de la couche de composite renforcé par des fibres (18), respectivement au moins une autre couche de feuille (33) en un polymère thermoplastique sont réunies et la couche de composite renforcé par des fibres (18) est recouverte par la réunion des couches de feuille (33) .

15. Document de valeur et/ou de sécurité, **caractérisé en ce que** celui-ci comprend au moins une feuille de données (10) selon l'une des revendications 1 à 11.
